# EUROPEAN PATENT SPECIFICATION

(11) **EP 3 378 678 B1**
(45) Date of publication and mention of the grant of the patent: **20.01.2021**
(21) Application number: 17197901.6
(22) Date of filing: 24.10.2017
(51) Int. Cl.: B60C 11/03, B60C 11/12, B60C 11/13

(54) **TIRE**
REIFEN
PNEUMATIQUE

(30) Priority: 24.03.2017 JP 2017059659; 21.08.2017 JP 2017158811
(43) Date of publication of application: 26.09.2018
(73) Proprietor: Sumitomo Rubber Industries, Ltd., Kobe-shi, Hyogo-ken (JP)
(72) Inventor: SHIBATA, Mitsutoshi, Kobe-shi, Hyogo 651-0072 (JP)
(74) Representative: Manitz Finsterwald Patent- und Rechtsanwaltspartnerschaft mbB

(56) References cited:
- EP-A1- 0 468 815
- EP-A1- 2 586 626
- EP-A1- 3 025 878
- EP-A2- 1 120 295

## Description

### BACKGROUND OF THE INVENTION

### Field of the Invention

The present invention relates to a tire, and more particularly, to a tire suitable for running on ice and snow-covered roads.

### Description of the Background Art

For example, various tires designed for running on compacted snow-covered road surfaces and ice-covered road surfaces (hereinafter, these road surfaces are sometimes referred to collectively as "snowy and icy road surfaces") have been proposed (e.g., Japanese Laid-Open Patent Publication No. 2011-42328). In this type of tires, each land portion has slit-like sipes having a narrow width. Such tires exert increased frictional force on snowy and icy road surfaces due to the edges of the sipes.

The number of sipes may be increased in order to improve running performance on snowy and icy road surfaces (hereinafter sometimes referred to merely as "on-snowy and icy road performance"). However, in such a method, the stiffness of the land portion decreases, disadvantageously leading to a deterioration in steering stability on dry road surfaces.

Tires with sipes partly adapted for an improved running performance on snowy and icy road surfaces are for instance disclosed in EP 3 025 878 A1 and EP 0 468 815 A1, respectively. In contrast to that tires with less adapted sipes are disclosed for instance in EP 2 586 626 A1 and EP 1 120 295 A2, respectively.

### SUMMARY OF THE INVENTION

With the above circumstances in mind, the present invention has been made. It is a main object of the present invention to provide a tire that has improved on-snowy and icy road performance while maintaining steering stability on dry roads.

The present invention is directed to a tire wherein: a shoulder land portion provided closest to a tread edge, a middle land portion provided inward of and adjacent to the shoulder land portion in a tire axial direction, and a circumferential narrow groove provided between the shoulder land portion and the middle land portion and extending in a tire circumferential direction, are provided in a tread portion; a plurality of middle sipes having an angle α relative to the tire axial direction are provided in the middle land portion; a plurality of shoulder sipes are provided in the shoulder land portion; and the plurality of shoulder sipes each have an inner inclined portion provided closer to the circumferential narrow groove and inclined relative to the tire axial direction at an angle β greater than the angle α of the middle sipe. Further, each shoulder sipe communicates with a shoulder slot that extends from the tread edge inward in the tire axial direction.

In the tire according to the present invention, a plurality of shoulder axial grooves dividing the shoulder land portion into a plurality of shoulder blocks are desirably provided in the shoulder land portion.

In the tire according to the present invention, each shoulder axial groove desirably has an inner portion provided closer to the circumferential narrow groove, and an absolute value of a difference between an angle of the inner portion relative to the tire axial direction and the angle β of the inner inclined portion is desirably not greater than five degrees.

In the tire according to the present invention, each shoulder axial groove desirably has an outer portion provided outward of the inner portion in the tire axial direction, and the outer portion is desirably inclined relative to the inner portion.

In the tire according to the present invention, a groove depth of the inner portion desirably is smaller than a groove depth of the outer portion.

In the tire according to the present invention, the middle land portion desirably has a plurality of middle axial grooves dividing the middle land portion into a plurality of middle blocks, and an outer end in the tire axial direction of each middle axial groove is desirably positioned such that the outer end does not overlap an inner end in the tire axial direction of the shoulder axial groove in the tire circumferential direction.

In the tire according to the present invention, a width in the tire axial direction of the middle land portion desirably increases and decreases alternately in the tire circumferential direction; the middle land portion desirably has a wide width portion having the width in the tire axial direction greater than an average width in the tire axial direction of the middle land portion; and the wide width portion is desirably connected to an inner end in the tire axial direction of the shoulder axial groove.

In the tire according to the present invention, the middle land portion desirably has a plurality of middle axial grooves dividing the middle land portion into a plurality of middle blocks, and an outer end in the tire axial direction of each middle axial groove is desirably located in a middle portion including a middle position in the tire circumferential direction of the shoulder block.

In the tire according to the present invention, the middle land portion desirably has a smallest width portion having a smallest width in the tire axial direction, and desirably, the smallest width portion is not provided with any of the middle axial grooves and is displaced with respect to an inner end in the tire axial direction of the shoulder axial groove.

In the tire according to the present invention, each shoulder sipe desirably has an outer inclined portion provided outward of the inner inclined portion in the tire axial direction, and the outer inclined portion is desirably inclined relative to the inner inclined portion.

In the tire according to the present invention, the plurality of middle sipes desirably include first middle sipes, and second middle sipes having a larger depth than the first middle sipes, the first middle sipes and the second middle sipes alternating in the tire circumferential direction.

In the tire according to the present invention, a middle main groove continuously extending zigzag in the tire circumferential direction is desirably provided inward of the middle land portion in the tire axial direction.

In the tire of the present invention, the shoulder land portion, the middle land portion, and the circumferential narrow groove provided between the shoulder land portion and the middle land portion and extending in the tire circumferential direction are provided in the tread portion. For example, when a great load is applied during turning or the like, the shoulder land portion and the middle land portion can support each other to have an apparent high stiffness. Therefore, the tire of the present invention can maintain steering stability on dry road surfaces.

The plurality of middle sipes are provided in the middle land portion. The plurality of shoulder sipes are provided in the shoulder land portion. The edges of each sipe can rub snowy and icy road surfaces, and thereby improve on-snowy and icy road performance.

The shoulder sipe has an inner inclined portion provided closer to the circumferential narrow groove and inclined at an angle greater than the angle of the middle sipe relative to the tire axial direction. The inner inclined portion provides relatively long edges in the tire circumferential direction, and thereby improves turning performance on snowy and icy roads. Meanwhile, the inner inclined portion is likely to reduce the stiffness in the tire axial direction of the shoulder land portion. However, as described above, the inner inclined portion is provided closer to the circumferential narrow groove, and therefore, even during running under a high load, the shoulder land portion and the middle land portion close the circumferential narrow groove and are thereby integrated together. As a result, such a disadvantage can be prevented.

Therefore, the tire of the present invention has improved on-snowy and icy road performance while maintaining steering stability on dry road surfaces.

### BRIEF DESCRIPTION OF THE DRAWINGS

FIG. 1 is a developed view of a tread portion according to an embodiment of the present invention;
FIG. 2 is an enlarged view of a middle land portion and a shoulder land portion;
FIG. 3 is an enlarged view of the middle land portion and the shoulder land portion;
FIG. 4 is a cross-sectional view taken along line A-A of FIG. 2; and
FIG. 5 is an enlarged view of a crown land portion.

### DESCRIPTION OF THE PREFERRED EMBODIMENTS

An embodiment of the present invention will now be described with reference to the accompanying drawings.

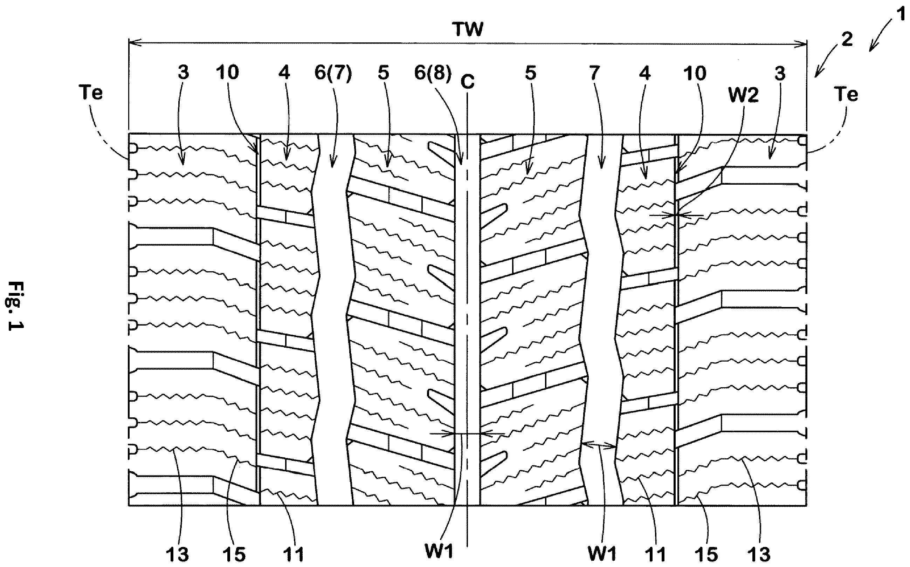

FIG. 1 is a developed view of a tread portion 2 of a tire 1 according to the embodiment of the present invention. In this embodiment, a pneumatic tire for a passenger car is illustrated as a preferable form. Note that, needless to say, the present invention is applicable to the tire 1 in other categories, such as heavy-duty tires and the like.

As shown in FIG. 1, the tread portion 2 of this embodiment has shoulder land portions 3, middle land portions 4, and crown land portions 5. In this embodiment, each shoulder land portion 3, each middle land portion 4, and each crown land portion 5 are provided on either side of a tire equator C. The shoulder land portion 3 is provided closest to a tread edge Te. The middle land portion 4 is provided inward of and adjacent to the shoulder land portion 3 in a tire axial direction. The crown land portion 5 is provided inward of and adjacent to the middle land portion 4 in the tire axial direction.

The "tread edge" Te is defined as an outermost ground contact position in the tire axial direction when a normal load is applied to the tire 1 in a normal state and the tire 1 is brought into contact with a plane at a camber angle of zero degrees. The normal state is a state where the tire is mounted to a normal rim and inflated to a normal internal pressure and no load is applied to the tire. The distance between the tread edges Te, Te in the tire axial direction in the normal state is referred to as a "tread ground-contact width TW". In the present specification, unless otherwise specified, dimensions of components of the tire 1 and the like are values measured in the normal state.

The "normal rim" is a rim that is defined, in a standard system including a standard on which the tire is based, by the standard for each tire, and is, for example, the "standard rim" in the JATMA standard, the "Design Rim" in the TRA standard, or the "Measuring Rim" in the ETRTO standard.

The "normal internal pressure" is an air pressure that is defined, in a standard system including a standard on which the tire is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

The "normal load" is a load that is defined, in a standard system including a standard on which the tire is based, by the standard for each tire, and is the "maximum load capacity" in the JATMA standard, the "maximum value" indicated in the table "TIRE LOAD LIMITS AT VARIOUS COLD INFLATION PRESSURES" in the TRA standard, or the "LOAD CAPACITY" in the ETRTO standard.

The tread portion 2 has main grooves 6 continuously extending in a tire circumferential direction. In this embodiment, the main grooves 6 include middle main grooves 7 and a crown main groove 8. Each middle main groove 7 is provided inward of the middle land portion 4 in the tire axial direction. In this embodiment, the middle main groove 7 demarcates the middle land portion 4 and the crown land portion 5. The crown main groove 8 is provided inward of each crown land portion 5 in the tire axial direction. In this embodiment, the crown main groove 8 demarcates a pair of the crown land portions 5, 5.

The middle main groove 7 extends, for example, zigzag in the tire circumferential direction. Such a middle main groove 7 provides edges in the tire axial direction, and thereby improves running stability on snowy and icy roads.

The crown main groove 8 extends, for example, straight in the tire circumferential direction. Such a crown main groove 8 maintains a high stiffness of each crown land portion 5 in the tire circumferential direction in the vicinity of the tire equator C, to which a great contact pressure is applied, resulting in an improvement in uneven wear resistance. Note that the main grooves 6 are not limited to such a form.

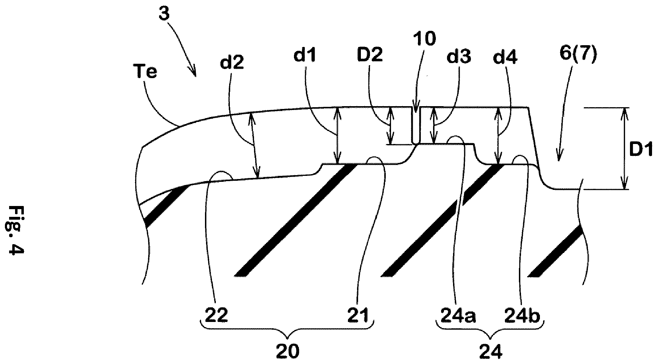

A groove width W1 of each main groove 6 is desirably, for example, 2 to 7% of the tread ground-contact width TW. A groove depth D1 (shown in FIG. 4) of each main groove 6 is desirably, for example, 6 to 12 mm.

The tread portion 2 has circumferential narrow grooves 10 that are provided between the shoulder land portions 3 and the middle land portions 4 so as to extend in the tire axial direction. Such a circumferential narrow groove 10 allows the shoulder land portion 3 and the middle land portion 4 to support each other to have an apparent high stiffness when a great load is applied during turning or the like, for example. Therefore, the tire 1 of this embodiment can maintain steering stability on dry road surfaces.

In this embodiment, each circumferential narrow groove 10 extends straight. Such a circumferential narrow groove 10 can improve the stiffness in the tire circumferential direction of portions of the shoulder land portion 3 and the middle land portion 4 close to the circumferential narrow groove 10.

The circumferential narrow groove 10 is, for example, a groove structure having a groove width W2 of 1 to 2 mm. A groove depth D2 (shown in FIG. 4) of the circumferential narrow groove 10 is desirably, for example, 20 to 60% of the groove depth D1 of the main groove 6.

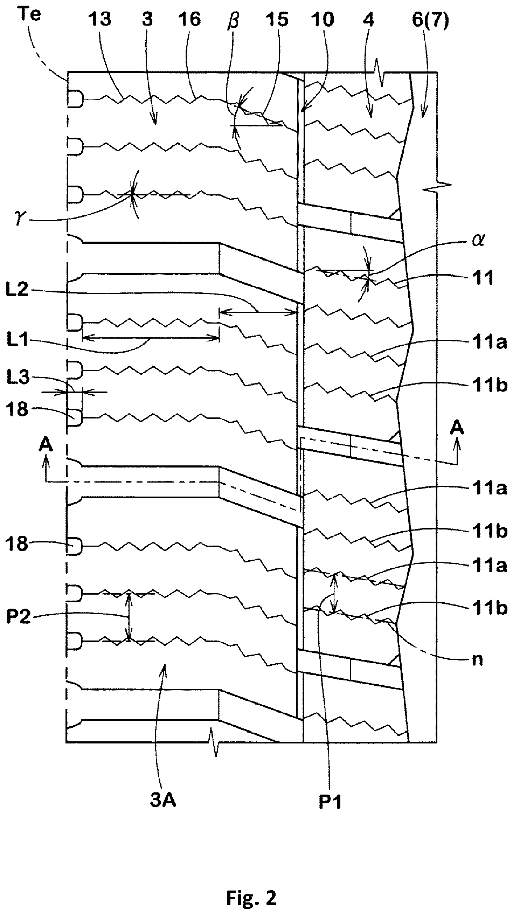

FIG. 2 is an enlarged view of the left shoulder land portion 3 and the left middle land portion 4 of FIG. 1. As shown in FIG. 2, the middle land portion 4 has a plurality of middle sipes 11 having an angle α relative to the tire axial direction. The edges of such middle sipes 11 rub snowy and icy road surfaces, and thereby improve on-snowy and icy road performance. In the present specification, a sipe is defined as a slit having a width of less than 1 mm.

In this embodiment, each middle sipe 11, which is open, connects the middle main groove 7 and the circumferential narrow groove 10. The middle sipe 11 is inclined to one side (upward to the left in FIG. 2) with respect to the tire axial direction. Such a middle sipe 11 provides large edges, and thereby significantly improves on-snowy and icy road performance.

The angle α of the middle sipe 11 is not particularly limited. For example, the angle α is desirably greater than zero degrees. Such a middle sipe 11 provides edges in the tire circumferential direction, and thereby improves turning performance on snowy and icy roads. When the angle α is excessively large, the edges in the tire circumferential direction are provided to an excessively great extent, so that straight running stability on snowy and icy roads may deteriorate. Therefore, the angle α is desirably 5 to 20 degrees.

The middle sipes 11 include first middle sipes 11a, and second middle sipes 11b having a greater depth than the first middle sipes 11a. The first middle sipes 11a and the second middle sipes 11b alternate in the tire circumferential direction. Such middle sipes 11 can improve on-snowy and icy road performance due to their edges while inhibiting a decrease in stiffness of the middle land portion 4.

The depth of each first middle sipe 11a is desirably, but not particularly limited to, 30 to 50% of the groove depth of the middle main groove 7. The depth of each second middle sipe 11b is desirably, but not particularly limited to, 70 to 80% of the groove depth of the middle main groove 7.

In this embodiment, each middle sipe 11 extends zigzag. Such a middle sipe 11 allows the land portions on both sides of the sipe to support each other when a load is applied during turning or the like, and therefore, the stiffness of the middle land portion 4 is apparently maintained high. In the present specification, the angle of each sipe, which extends zigzag, relative to the tire axial direction is the angle between an amplitude center line "n" of the zigzag and a line extending in the tire axial direction. In this embodiment, the sipe is not limited to a zigzag.

The middle sipes 11 are arranged at a regular pitch P1 in the tire circumferential direction. As a result, uniform stiffness in the tire circumferential direction is provided between each middle sipe 11, and therefore, uneven wear resistance is improved.

Each shoulder land portion 3 has a plurality of shoulder sipes 13. The edges of such shoulder sipes 13 rub snowy and icy road surfaces, and thereby improve on-snowy and icy road performance.

In this embodiment, each shoulder sipe 13 extends from the circumferential narrow groove 10 outward in the tire axial direction. Such a shoulder sipe 13 provides large edges. The shoulder sipe 13 is not limited to such a form. For example, the shoulder sipe 13 may be provided outward of the circumferential narrow groove 10 with a space therebetween.

In this embodiment, each shoulder sipe 13 includes an inner inclined portion 15 provided closer to the circumferential narrow groove 10, and an outer inclined portion 16 provided outward of the inner inclined portion 15 in the tire axial direction.

Each inner inclined portion 15 is inclined relative to the tire axial direction at an angle β that is greater than the angle α of the middle sipe 11. Such an inner inclined portion 15 provides relatively long edges in the tire circumferential direction, and thereby improves turning performance on snowy and icy roads. Meanwhile, the inner inclined portion 15 is likely to reduce the stiffness in the tire axial direction of the shoulder land portion 3. However, as described above, the inner inclined portion 15 is provided closer to the circumferential narrow groove 10, and therefore, even during running under a high load, the shoulder land portion 3 and the middle land portion 4 close the circumferential narrow groove 10 and are thereby integrated together. As a result, the above disadvantage can be prevented.

In this embodiment, the inner inclined portion 15 is inclined to one side (upward to the left in FIG. 2) relative to the tire axial direction. Such an inner inclined portion 15 can reduce a decrease in stiffness of the shoulder land portion 3, and maintain steering stability on dry road surfaces.

In order to effectively exert the above function, the difference (β - α) between the angle β and the angle α is desirably, for example, 5 to 25 degrees. The angle β is desirably, for example, 20 to 30 degrees.

The outer inclined portion 16 is linked to the outer end in the tire axial direction of the inner inclined portion 15, and is inclined relative to the inner inclined portion 15. As a result, the shoulder sipe 13 provides edges having different angles relative to the tire axial direction, and thereby improves on-snowy and icy road performance. In this embodiment, the outer inclined portion 16 has an angle γ relative to the tire axial direction, which is smaller than the angle β. The edges in the tire axial direction of such an outer inclined portion 16 have enhanced rubbing force, and thereby improve straight running stability on snowy and icy roads.

In order to effectively exert the above function, the angle γ of the outer inclined portion 16 is desirably, for example, not greater than 15 degrees and more desirably not greater than 5 degrees.

In this embodiment, a length L1 in the tire axial direction of the outer inclined portion 16 is greater than a length L2 in the tire axial direction of the inner inclined portion 15. This inhibits a decrease in stiffness in the tire axial direction of the shoulder land portion 3. In order to improve turning performance on snowy and icy roads while ensuring the above function, the length L1 of the outer inclined portion 16 is desirably, for example, 1.3 to 2.3 times the length L2 of the inner inclined portion 15.

The shoulder sipes 13 are arranged at a regular pitch P2 in the tire circumferential direction. As a result, uniform stiffness in the tire circumferential direction is provided between each shoulder sipe 13, and therefore, uneven wear resistance is improved.

In this embodiment, each shoulder sipe 13 communicates with a shoulder slot 18 that extends from the tread edge Te inward in the tire axial direction. The shoulder slot 18 allows water-containing snow, ice, and the like cut from snowy and icy roads to be smoothly discharged from the shoulder sipe 13 to the tread edge Te side therethrough. In this embodiment, the shoulder slot 18 communicates with the outer inclined portion 16.

A length L3 in the tire axial direction of such a shoulder slot 18 is desirably smaller than the length L2 of the inner inclined portion 15. This inhibits a decrease in stiffness of the shoulder land portion 3. The length L3 of the shoulder slot 18 is more desirably 10 to 30% of the length L2 of the inner inclined portion 15.

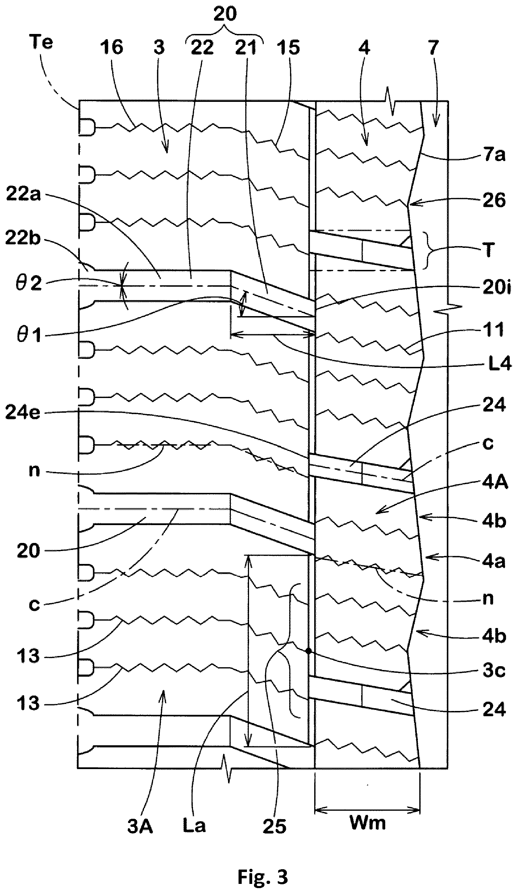

FIG. 3 is an enlarged view of the left shoulder land portion 3 and the left middle land portion 4 of FIG. 1. As shown in FIG. 3, the shoulder land portion 3 of this embodiment further has a plurality of shoulder axial grooves 20 that divide the shoulder land portion 3 into a plurality of shoulder blocks 3A. In this embodiment, an inner end 20i in the tire axial direction of each shoulder axial groove 20 communicates with the circumferential narrow groove 10.

In this embodiment, each shoulder axial groove 20 includes an inner portion 21 provided closer to the circumferential narrow groove 10, and an outer portion 22 provided outward of the inner portion 21 in the tire axial direction.

In this embodiment, the inner portion 21 extends along the inner inclined portion 15. In this embodiment, the outer portion 22 extends along the outer inclined portion 16. As a result, the stiffness in the tire circumferential direction of the shoulder block 3A between the shoulder axial groove 20 and the shoulder sipe 13 is uniform along the tire axial direction, and therefore, uneven wear resistance is improved. In the present specification, "the axial groove extending along the sipe" refers to a form in which the angle between the amplitude center line "n" of the sipe and the groove center line "c" of the axial groove is not greater than five degrees, including, of course, zero degrees.

The outer portion 22 is inclined relative to the inner portion 21. Such a shoulder axial groove 20 provides groove edges having different angles relative to the tire axial direction, and thereby improves on-snowy and icy road performance.

The absolute value |β - θ1| of the difference between an angle θ1 of the inner portion 21 relative to the tire axial direction and an angle β (shown in FIG. 2) of the inner inclined portion 15 relative to the tire axial direction is desirably not greater than five degrees. When the absolute value |β - θ1| exceeds five degrees, the stiffness in the tire circumferential direction of the shoulder block 3A between the inner portion 21 and the inner inclined portion 15 significantly changes along the tire axial direction, and therefore, uneven wear resistance may deteriorate. Therefore, the absolute value |β - θ1| is more desirably not greater than two degrees.

The angle θ1 of the inner portion 21 is desirably, but not particularly limited to, for example, 20 to 30 degrees.

From the viewpoint of effectively exerting the above function, the absolute value |γ - θ2| of the difference between an angle θ2 of the outer portion 22 relative to the tire axial direction and the angle γ (shown in FIG. 2) of the outer inclined portion 16 relative to the tire axial direction is desirably not greater than five degrees and more desirably not greater than two degrees.

The absolute value |L2 - L4| of the difference between a length L4 in the tire axial direction of the inner portion 21 and the length L2 (shown in FIG. 2) in the tire axial direction of the inner inclined portion 15 is desirably small. As a result, the above function is more effectively exerted. The absolute value |L2 - L4| is desirably, for example, not greater than 5 mm, and more desirably not greater than 3 mm.

In this embodiment, the outer portion 22 includes a uniform-width portion 22a having the same width in the tire circumferential direction as that of the inner portion 21, and an incremental portion 22b that is provided between the uniform-width portion 22a and the tread edge Te and that has a width in the tire circumferential direction that gradually increases. Such an outer portion 22 allows snow, ice, and the like retained in the outer portion 22 to be more smoothly discharged to the outside of the tread edge Te while maintaining a high stiffness of the shoulder land portion 3.

FIG. 4 is a cross-sectional view taken along line A-A of FIG. 2. As shown in FIG. 4, in this embodiment, a groove depth d1 of the inner portion 21 is smaller than a groove depth d2 of the outer portion 22. This allows snow, ice, and the like retained in the outer portion 22 to be more smoothly discharged to the outside of the tread edge Te while maintaining the stiffness of the shoulder land portion 3. The groove depth d1 of the inner portion 21 is desirably, for example, 70 to 95% of the groove depth d2 of the outer portion 22. The groove depth d1 of the inner portion 21 is also desirably, for example, 50 to 90% of the groove depth D1 of the main groove 6.

As shown in FIG. 3, in this embodiment, the middle land portion 4 includes a plurality of middle axial grooves 24 that divides the middle land portion 4 into a plurality of middle blocks 4A. The groove edges of such a middle axial groove 24 rub snowy and icy road surfaces, and thereby improve on-snowy and icy road performance.

In this embodiment, each middle axial groove 24 extends along the middle sipe 11. As a result, the stiffness in the tire circumferential direction of the middle block 4A between the middle axial groove 24 and the middle sipe 11 is uniform in the tire axial direction, and therefore, uneven wear resistance is maintained high.

Each middle axial groove 24 has a uniform groove width and extends straight. Such a middle axial groove 24 also maintains a high stiffness of the middle land portion 4.

An outer end 24e in the tire axial direction of the middle axial groove 24 is desirably positioned such that the outer end 24e does not overlap the inner end 20i in the tire axial direction of the shoulder axial groove 20 in the tire circumferential direction. This allows the middle land portion 4 and the shoulder land portion 3 to more effectively support each other, resulting in an increase in apparent stiffness, and therefore, steering stability on dry road surfaces is further maintained. The "not overlap" means that the outer end of the groove edge on any one of the sides in the tire circumferential direction of the middle axial groove 24 is located at least on the other side in the tire circumferential direction of the groove edge on the other side in the tire circumferential direction of the shoulder axial groove 20.

The outer end 24e of the middle axial groove 24 is located in a middle portion 25 including a middle position 3c in the tire circumferential direction of the shoulder block 3A. As a result, the above function is improved. The middle portion 25 refers to a region that extends from the middle position 3c of the shoulder block 3A in opposite directions along the tire circumferential direction, covering 35% of a length La in the tire circumferential direction of the shoulder block 3A on each side of the middle position 3c.

As shown in FIG. 4, the middle axial groove 24 includes a middle outer portion 24a that communicates with the circumferential narrow groove 10, and a middle inner portion 24b that connects the middle outer portion 24a and the middle main groove 7 and that has a larger groove depth than the middle outer portion 24a. This allows snow, ice, and the like in the middle axial groove 24 to be smoothly discharged into the middle main groove 7 having a large groove width, and thereby improves on-snowy and icy road performance. Such a middle axial groove 24 also inhibits a decrease in stiffness of the middle land portion 4, and thereby maintains high steering stability on dry road surfaces.

In order to effectively exert the above function, a groove depth d3 of the middle outer portion 24a is desirably 50 to 80% of a groove depth d4 of the middle inner portion 24b. The groove depth d4 of the middle inner portion 24b is desirably 60 to 80% of the groove depth D1 of the middle main groove 7.

As shown in FIG. 3, a width Wm in the tire axial direction of the middle land portion 4 alternately increases and decreases in the tire circumferential direction. As a result, the middle land portion 4 has wide width portions 4a having the width Wm in the tire axial direction that is greater than an average width in the tire axial direction of the middle land portion 4, and narrow width portions 4b having the width Wm in the tire axial direction that is smaller than the average width in the tire axial direction of the middle land portion 4. In the present specification, the average width is calculated, excluding the middle land portion 4 in a projected region T in the tire axial direction of the middle axial groove 24.

Each wide width portion 4a of this embodiment is connected to the inner end 20i in the tire axial direction of the shoulder axial groove 20. As a result, a portion of the shoulder block 3A in the vicinity of the shoulder axial groove 20 that has a relatively small stiffness is adjacent to the wide width portion 4a, having a relatively great stiffness, in the tire axial direction, and therefore, the shoulder land portion 3 is inhibited from significantly falling. Therefore, steering stability and uneven wear resistance on dry road surfaces are improved.

The middle land portion 4 has smallest width portions 26 having a smallest width in the tire axial direction. Each smallest width portion 26 of this embodiment corresponds to a projecting position where an outer groove edge 7a in the tire axial direction of the middle main groove 7 projects outward in the tire axial direction. In the present specification, the smallest width portion 26 excludes the projected region T of the middle axial groove 24.

The smallest width portion 26 is not provided with any of the middle axial grooves 24. The smallest width portion 26 is displaced with respect to the inner end 20i in the tire axial direction of the shoulder axial groove 20. As a result, in the middle land portion 4, a decrease in stiffness of the smallest width portion 26 is inhibited, and therefore, uneven wear resistance is maintained high.

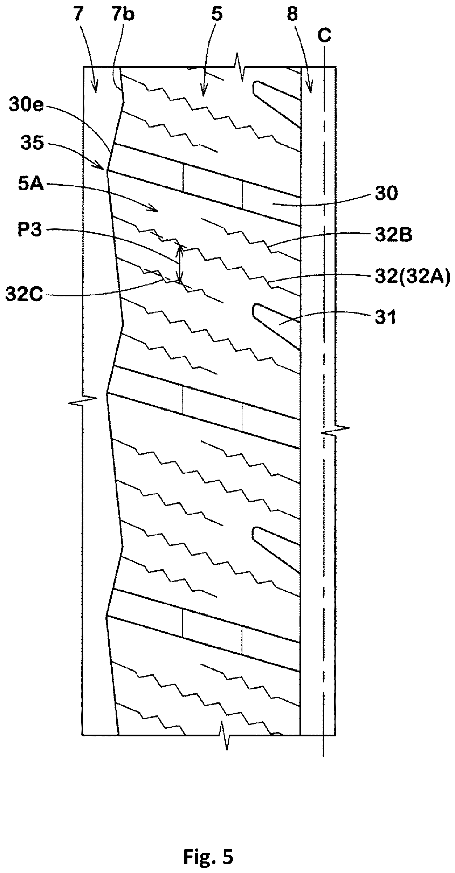

FIG. 5 is an enlarged view of the left crown land portion 5 of FIG. 1. As shown in FIG. 5, in this embodiment, each crown land portion 5 includes a plurality of crown axial grooves 30, a plurality of crown lug grooves 31, and a plurality of crown sipes 32.

The respective crown axial grooves 30 connect the crown main groove 8 and the middle main groove 7, and divide the crown land portion 5 into a plurality of crown blocks 5A. In this embodiment, each crown axial groove 30 is inclined to one side relative to the tire axial direction and extends straight. Such a crown axial groove 30 provides edges in the tire circumferential direction, and thereby improves on-snowy and icy road performance.

An outer end 30e in the tire axial direction of the crown axial groove 30 communicates with the middle main groove 7 at a projecting position 35 where an inner groove edge 7b in the tire axial direction of the middle main groove 7 projects outward in the tire axial direction. As a result, the stiffness in the tire axial direction of the crown land portion 5 is uniform along the tire circumferential direction, and therefore, uneven wear resistance is improved.

In this embodiment, the crown lug groove 31 is inclined in the same direction as that of the crown axial groove 30. Such a crown lug groove 31 can reduce a difference in the stiffness in the tire circumferential direction of the crown land portion 5.

The crown lug groove 31 of this embodiment is inclined relative to the tire axial direction at an angle greater than that of the crown axial groove 30. The crown lug groove 31 provides relatively long edges in the tire circumferential direction, and thereby improves turning performance on snowy and icy roads.

Each crown sipe 32 is inclined in the same direction as that of the crown lug groove 31. Such a crown sipe 32 can reduce a difference in the stiffness in the tire circumferential direction of the crown land portion 5.

The crown sipe 32 is inclined relative to the tire axial direction at an angle greater than that of the crown axial groove 30. The crown sipe 32 provides relatively long edges in the tire circumferential direction, and thereby improves turning performance on snowy and icy roads.

The crown sipes 32 include first crown sipes 32A, second crown sipes 32B, and third crown sipes 32C. Each first crown sipe 32A connects the crown main groove 8 and the middle main groove 7. Each second crown sipe 32B extends from the crown main groove 8 outward in the tire axial direction and ends in the crown block 5A. Each third crown sipe 32C extends from the middle main groove 7 inward in the tire axial direction and ends in the crown block 5A. The crown sipes 32 are not limited to such a form.

The crown sipes 32 provided in the crown block 5A are arranged at a regular pitch P3 in the tire circumferential direction. As a result, uniform stiffness in the tire circumferential direction is provided between each crown sipe 32, and therefore, uneven wear resistance is improved.

Although the embodiments of the present invention have been described in detail above, the present invention is defined by the claims, but not limited to the above embodiments, and it is understood that various modifications can be made to implement the present invention.

### EXAMPLES

Tires with a size of 205/65R16 having the basic tread pattern shown in FIG. 1 were produced as test samples on the basis of specifications in Table 1. Each test tire was tested for on-snowy and icy road performance, steering stability on a dry road surface, and uneven wear performance. Main specifications common to the test tires and test methods are as follows.
Height of each main groove: 10 mm
Tread ground-contact width TW: 176 mm

### <On-Snowy and Icy Road Performance and Steering Stability on Dry Road Surface>

Each test tire was mounted on all the wheels of a four-wheel drive car having an engine displacement of 3600 cc under conditions described below. Sensory evaluation was made by a test driver for running characteristics related to traction, running stability, and turning performance when the test driver drove the car on test courses having snowy and icy road surfaces and a dry asphalt road surface. The results are shown as scores obtained on the basis of the result of Comparative Example 1 being 100. A higher value indicates a better running characteristic.
Rim: 6.5 J
Internal pressure: 390 kPa (front wheel), 350 kPa (rear wheel)

### <Uneven Wear Resistance>

By using the above vehicle, the test tires were run on a test course having a dry asphalt road surface for 10,000 km. Thereafter, a difference in wear amount caused by heel and toe wear was measured in the shoulder block and the middle block. The results are shown as indexes obtained using the reciprocals of the measured values on the basis of the value of Comparative Example 1 being 100. A higher value indicates better uneven wear resistance.

The test results, etc. are shown in Table 1.

**[Table 1]**

| | | Comparativ e example 1 | Example 1 | Example 2 | Example 3 | Example 4 | Example 5 |
|---|---|---|---|---|---|---|---|
| Angle α of middle sipe | | 12 | 12 | 12 | 12 | 12 | 12 |
| | (degrees) | | | | | | |
| Angle β of inner inclined portion | | 12 | 25 | 15 | 40 | 25 | 25 |
| | (degrees) | | | | | | |
| Angle θ1 of inner portion | | 25 | 25 | 20 | 35 | 25 | 25 |
| | (degrees) | | | | | | |
| Depth of first middle sipe/D1 | | 60 | 40 | 40 | 40 | 60 | 40 |
| | (%) | | | | | | |
| Depth of second middle sipe/D1 | | 60 | 75 | 75 | 75 | 60 | 75 |
| | (%) | | | | | | |
| Positions in tire circumferential direction of inner end of shoulder axial groove and outer end of middle axial groove | | Overlapping | Not overlapping | Not overlapping | Not overlapping | Not overlapping | Overlapping |
| On-snowy and icy road performance | | 100 | 120 | 110 | 115 | 115 | 115 |
| [Score, higher value is better] | | | | | | | |
| Steering stability on dry road surface | | 100 | 100 | 100 | 100 | 100 | 100 |
| [Score, higher value is better] | | | | | | | |
| Uneven wear resistance | | 100 | 110 | 105 | 100 | 105 | 105 |
| [Score, higher value is better] | | | | | | | |

According to the test results, it can be verified that the tires of the examples have improved on-snowy and icy road performance while maintaining steering stability on a dry road surface, compared to the tire of the comparative example. In addition, the uneven wear resistance is maintained high.

## Claims

1. A tire (1) wherein
a shoulder land portion (3) provided closest to a tread edge (Te), a middle land portion (4) provided inward of and adjacent to the shoulder land portion (3) in a tire axial direction, and a circumferential narrow groove (10) provided between the shoulder land portion (3) and the middle land portion (4) and extending in a tire circumferential direction, are provided in a tread portion (2),
a plurality of middle sipes (11) having an angle α relative to the tire axial direction are provided in the middle land portion (4),
a plurality of shoulder sipes (13) are provided in the shoulder land portion (3), and
the plurality of shoulder sipes (13) each have an inner inclined portion (15) provided closer to the circumferential narrow groove (10) and inclined relative to the tire axial direction at an angle β greater than the angle α of the middle sipe (11),
wherein each shoulder sipe (13) communicates with a shoulder slot (18) that extends from the tread edge (Te) inward in the tire axial direction.

2. The tire (1) according to claim 1, wherein a plurality of shoulder axial grooves (20) dividing the shoulder land portion (3) into a plurality of shoulder blocks (3A) are provided in the shoulder land portion (3).

3. The tire (1) according to claim 2, wherein
each shoulder axial groove (20) has an inner portion (21) provided closer to the circumferential narrow groove (10), and
an absolute value of a difference between an angle of the inner portion (21) relative to the tire axial direction and the angle β of the inner inclined portion (15) is not greater than five degrees.

4. The tire (1) according to claim 3, wherein
each shoulder axial groove (20) has an outer portion (22) provided outward of the inner portion (21) in the tire axial direction, and
the outer portion (22) is inclined relative to the inner portion (21)

5. The tire (1) according to claim 4, wherein
a groove depth (d1) of the inner portion (21) is smaller than a groove depth (d2) of the outer portion (22).

6. The tire (1) according to any one of claims 2 to 5, wherein
the middle land portion (4) has a plurality of middle axial grooves (24) dividing the middle land portion (4) into a plurality of middle blocks (4A), and
an outer end (24e) in the tire axial direction of each middle axial groove (24) is positioned such that the outer end (24e) does not overlap an inner end (20i) in the tire axial direction of the shoulder axial groove (20) in the tire circumferential direction,
whereby "not overlap" means that the outer end of the groove edge on any one of the sides in the tire circumferential direction of the middle axial groove (24) is located at least on the other side in the tire circumferential direction of the groove edge on the other side in the tire circumferential direction of the shoulder axial groove (20).

7. The tire (1) according to any one of claims 2 to 6, wherein
a width (Wm) in the tire axial direction of the middle land portion (4) alternately increases and decreases in the tire circumferential direction, and the middle land portion (4) has a wide width portion (4a) having the width (Wm) in the tire axial direction greater than an average width in the tire axial direction of the middle land portion (4), and
the wide width portion (4a) is connected to an inner end (20i) in the tire axial direction of the shoulder axial groove (20).

8. The tire (1) according to any one of claims 2 to 7, wherein
the middle land portion (4) has a plurality of middle axial grooves (24) dividing the middle land portion (4) into a plurality of middle blocks (4A), and
an outer end (24e) in the tire axial direction of each middle axial groove (24) is located in a middle portion (25) including a middle position (3c) in the tire circumferential direction of the shoulder block (3A),
wherein the middle portion (25) refers to a region that extends from the middle position (3c) of the shoulder block (3A) in opposite directions along the tire circumferential direction, covering 35% of a length (La) in the tire circumferential direction of the shoulder block (3A) on each side of the middle position (3c).

9. The tire (1) according to claim 8, wherein
the middle land portion (4) has a smallest width portion (26) having a smallest width in the tire axial direction, and
the smallest width portion (26) is not provided with any of the middle axial grooves (24) and is displaced with respect to an inner end (20i) in the tire axial direction of the shoulder axial groove (20).

10. The tire (1) according to any one of claims 1 to 9, wherein
each shoulder sipe (13) has an outer inclined portion (16) provided outward of the inner inclined portion (15) in the tire axial direction, and
the outer inclined portion (16) is inclined relative to the inner inclined portion (15).

11. The tire (1) according to any one of claims 1 to 10, wherein the plurality of middle sipes (11) include first middle sipes (11a), and second middle sipes (11b) having a larger depth than the first middle sipes (11a), the first middle sipes (11a) and the second middle sipes (11b) alternating in the tire circumferential direction.

12. The tire (1) according to any one of claims 1 to 11, wherein a middle main groove (7) continuously extending zigzag in the tire circumferential direction is provided inward of the middle land portion (4) in the tire axial direction.

## Patentansprüche

1. Reifen (1), wobei
ein Schulterlandabschnitt (3), der am nächsten an einer Laufflächenkante (Te) vorgesehen ist, ein mittlerer Landabschnitt (4), der innen von und benachbart zu dem Schulterlandabschnitt (3) in einer Reifenaxialrichtung vorgesehen ist, und eine schmale Umfangsrille (10), die zwischen dem Schulterlandabschnitt (3) und dem mittleren Landabschnitt (4) vorgesehen ist und sich in einer Reifenumfangsrichtung erstreckt, in einem Laufflächenabschnitt (2) vorgesehen sind,
eine Vielzahl von mittleren Feinschnitten (11), die einen Winkel α relativ zur Reifenaxialrichtung aufweisen, in dem mittleren Landabschnitt (4) vorgesehen ist,
eine Vielzahl von Schulterfeinschnitten (13) in dem Schulterlandabschnitt (3) vorgesehen ist, und
die Vielzahl von Schulterfeinschnitten (13) jeweils einen inneren geneigten Abschnitt (15) aufweist, der näher an der schmalen Umfangsrille (10) vorgesehen ist und relativ zu der Reifenaxialrichtung unter einem Winkel β geneigt ist, der größer als der Winkel α des mittleren Feinschnitts (11) ist,
wobei jeder Schulterfeinschnitt (13) mit einem Schulterschlitz (18) kommuniziert, der sich von der Laufflächenkante (Te) in der Reifenaxialrichtung nach innen erstreckt.

2. Reifen (1) nach Anspruch 1, wobei
eine Vielzahl von Schulteraxialrillen (20), die den Schulterlandabschnitt (3) in eine Vielzahl von Schulterblöcken (3A) teilen, in dem Schulterlandabschnitt (3) vorgesehen ist.

3. Reifen (1) nach Anspruch 2, wobei
jede Schulteraxialrille (20) einen inneren Abschnitt (21) aufweist, der näher an der schmalen Umfangsrille (10) vorgesehen ist, und
ein Absolutwert einer Differenz zwischen einem Winkel des inneren Abschnitts (21) relativ zu der Reifenaxialrichtung und dem Winkel β des inneren geneigten Abschnitts (15) nicht größer als fünf Grad ist.

4. Reifen (1) nach Anspruch 3, wobei
jede Schulteraxialrille (20) einen äußeren Abschnitt (22) aufweist, der in der Reifenaxialrichtung außen von dem inneren Abschnitt (21) vorgesehen ist, und
der äußere Abschnitt (22) relativ zu dem inneren Abschnitt (21) geneigt ist.

5. Reifen (1) nach Anspruch 4, wobei eine Rillentiefe (d1) des inneren Abschnitts (21) kleiner als eine Rillentiefe (d2) des äußeren Abschnitts (22) ist.

6. Reifen (1) nach einem der Ansprüche 2 bis 5, wobei
der mittlere Landabschnitt (4) eine Vielzahl von mittleren Axialrillen (24) aufweist, die den mittleren Landabschnitt (4) in eine Vielzahl von mittleren Blöcken (4A) teilen, und
ein äußeres Ende (24e) in der Reifenaxialrichtung jeder mittleren Axialrille (24) so positioniert ist, dass das äußere Ende (24e) ein inneres Ende (20i) in der Reifenaxialrichtung der Schulteraxialrille (20) in der Reifenumfangsrichtung nicht überlappt,
wobei "nicht überlappen" bedeutet, dass das äußere Ende der Rillenkante auf einer der Seiten in der Reifenumfangsrichtung der mittleren Axialrille (24) zumindest auf der anderen Seite in der Reifenumfangsrichtung der Rillenkante auf der anderen Seite in der Reifenumfangsrichtung der Schulteraxialrille (20) liegt.

7. Reifen (1) nach einem der Ansprüche 2 bis 6, wobei
eine Breite (Wm) in der Reifenaxialrichtung des mittleren Landabschnitts (4) in der Reifenumfangsrichtung abwechselnd zunimmt und abnimmt, und der mittlere Landabschnitt (4) einen Abschnitt mit weiter Breite (4a) aufweist, dessen Breite (Wm) in der Reifenaxialrichtung größer als eine durchschnittliche Breite in der Reifenaxialrichtung des mittleren Landabschnitts (4) ist, und
der Abschnitt mit weiter Breite (4a) mit einem inneren Ende (20i) in der Reifenaxialrichtung der Schulteraxialrille (20) verbunden ist.

8. Reifen (1) nach einem der Ansprüche 2 bis 7, wobei
der mittlere Landabschnitt (4) eine Vielzahl von mittleren Axialrillen (24) aufweist, die den mittleren Landabschnitt (4) in eine Vielzahl von mittleren Blöcken (4A) teilen, und
ein äußeres Ende (24e) in der Reifenaxialrichtung von jeder mittleren Axialrille (24) in einem mittleren Abschnitt (25) angeordnet ist, der eine mittlere Position (3c) in der Reifenumfangsrichtung des Schulterblocks (3A) einschließt,
wobei sich der mittlere Abschnitt (25) auf einen Bereich bezieht, der sich von der mittleren Position (3c) des Schulterblocks (3A) in entgegengesetzte Richtungen entlang der Reifenumfangsrichtung erstreckt und 35 % einer Länge (La) in der Reifenumfangsrichtung des Schulterblocks (3A) auf jeder Seite der mittleren Position (3c) abdeckt.

9. Reifen (1) nach Anspruch 8, wobei
der mittlere Landabschnitt (4) einen Abschnitt (26) mit kleinster Breite in der Reifenaxialrichtung aufweist, und
der Abschnitt mit kleinster Breite (26) nicht mit einer der mittleren Axialrillen (24) versehen ist und in Bezug auf ein inneres Ende (20i) in der Reifenaxialrichtung der axialen Schulterrille (20) versetzt ist.

10. Reifen (1) nach einem der Ansprüche 1 bis 9, wobei
jeder Schulterfeinschnitt (13) einen äußeren geneigten Abschnitt (16) aufweist, der in der Reifenaxialrichtung außen von dem inneren geneigten Abschnitt (15) vorgesehen ist, und
der äußere geneigte Abschnitt (16) relativ zu dem inneren geneigten Abschnitt (15) geneigt ist.

11. Reifen (1) nach einem der Ansprüche 1 bis 10, wobei die Vielzahl von mittleren Feinschnitten (11) erste mittlere Feinschnitte (11a) und zweite mittlere Feinschnitte (11b) mit einer größeren Tiefe als die ersten mittleren Feinschnitte (11a) umfasst, wobei die ersten mittleren Feinschnitte (11a) und die zweiten mittleren Feinschnitte (11b) sich in der Reifenumfangsrichtung abwechseln.

12. Reifen (1) nach einem der Ansprüche 1 bis 11, wobei eine mittlere Hauptrille (7), die sich kontinuierlich zickzackförmig in der Umfangsrichtung des Reifens erstreckt, innen von dem mittleren Landabschnitt (4) in der Reifenaxialrichtung vorgesehen ist.

## Revendications

1. Pneumatique (1) dans lequel
une portion en relief d'épaulement (3) prévue au plus près d'un bord de bande de roulement (Te), une portion en relief médiane (4) prévue à l'intérieur de et de manière adjacente à la portion en relief d'épaulement (3) dans une direction axiale du pneumatique, et une rainure étroite circonférentielle (10) prévue entre la portion en relief d'épaulement (3) et la portion en relief médiane (4) et s'étendant dans une direction circonférentielle du pneumatique, sont prévues dans une portion formant bande de roulement (2),
une pluralité de fentes médianes (11) ayant un angle α relativement à la direction axiale du pneumatique sont prévues dans la portion en relief médiane (4),
une pluralité de fentes d'épaulement (13) sont prévues dans la portion en relief d'épaulement (3), et
la pluralité de fentes d'épaulement (13) ont chacune une portion inclinée intérieure (15) prévue plus près de la rainure étroite circonférentielle (10) et inclinée relativement à la direction axiale du pneumatique sous un angle β plus grand que l'angle α de la fente médiane (11),
dans lequel chaque fente d'épaulement (13) communique avec un creux d'épaulement (18) qui s'étend depuis le bord de bande de roulement (Te) vers l'intérieur dans la direction axiale du pneumatique.

2. Pneumatique (1) selon la revendication 1, dans lequel une pluralité de rainures axiales d'épaulement (20) divisant la portion en relief d'épaulement (3) en une pluralité de blocs d'épaulement (3A) sont prévues dans la portion en relief d'épaulement (3).

3. Pneumatique (1) selon la revendication 2, dans lequel chaque rainure axiale d'épaulement (20) a une portion intérieure (21) prévue plus près de la rainure étroite circonférentielle (10), et
une valeur absolue d'une différence entre un angle de la portion intérieure (21) relativement à la direction axiale du pneumatique et l'angle β de la portion inclinée intérieure (15) n'est pas supérieure à cinq degrés.

4. Pneumatique (1) selon la revendication 3, dans lequel
chaque rainure axiale d'épaulement (20) a une portion extérieure (22) prévue à l'extérieur de la portion intérieure (21) dans la direction axiale du pneumatique, et
la portion extérieure (22) est inclinée relativement à la portion intérieure (21).

5. Pneumatique (1) selon la revendication 4, dans lequel
une profondeur de rainure (d1) de la portion intérieure (21) est plus petite qu'une profondeur de rainure (d2) de la portion extérieure (22).

6. Pneumatique (1) selon l'une quelconque des revendications 2 à 5, dans lequel
la portion en relief médiane (4) a une pluralité de rainures axiales médianes (24) divisant la portion en relief médiane (4) en une pluralité de blocs médians (4A), et
une extrémité extérieure (24e) dans la direction axiale du pneumatique de chaque rainure axiale médiane (24) est positionnée de sorte que l'extrémité extérieure (24e) ne recouvre pas une extrémité intérieure (20i) dans la direction axiale du pneumatique de la rainure axiale d'épaulement (20) dans la direction circonférentielle du pneumatique,
où « ne recouvre pas » signifie que l'extrémité extérieure du bord de rainure sur l'un quelconque des côtés dans la direction circonférentielle du pneumatique de la rainure axiale médiane (24) est située au moins sur l'autre côté dans la direction circonférentielle du pneumatique du bord de rainure de l'autre côté dans la direction circonférentielle du pneumatique de la rainure axiale d'épaulement (20).

7. Pneumatique (1) selon l'une quelconque des revendications 2 à 6, dans lequel
une largeur (Wm) dans la direction axiale du pneumatique de la portion en relief médiane (4) augmente et diminue en alternance dans la direction circonférentielle du pneumatique, et la portion en relief médiane (4) a une portion de grande largeur (4a) dont la largeur (Wm) dans la direction axiale du pneumatique est supérieure à une largeur moyenne dans la direction axiale du pneumatique de la portion en relief médiane (4), et
la portion de grande largeur (4a) est connectée à une extrémité intérieure (20i) dans la direction axiale du pneumatique de la rainure axiale d'épaulement (20).

8. Pneumatique (1) selon l'une quelconque des revendications 2 à 7, dans lequel
la portion en relief médiane (4) a une pluralité de rainures axiales médianes (24) divisant la portion en relief médiane (4) en une pluralité de blocs médians (4A), et
une extrémité extérieure (24e) dans la direction axiale du pneumatique de chaque rainure axiale médiane (24) est située dans une portion médiane (25) incluant une position médiane (3c) dans la direction circonférentielle du pneumatique du bloc d'épaulement (3A),
dans lequel la portion médiane (25) se réfère à une région qui s'étend depuis la position médiane (3c) du bloc d'épaulement (3A) dans des directions opposées le long de la direction circonférentielle du pneumatique, couvrant 35 % d'une longueur (La) dans la direction circonférentielle du pneumatique du bloc d'épaulement (3A) sur chaque côté de la position médiane (3c).

9. Pneumatique (1) selon la revendication 8, dans lequel
la portion en relief médiane (4) a une portion de plus petite largeur (26) ayant une plus petite largeur dans la direction axiale du pneumatique, et
la portion de plus petite largeur (26) n'est dotée d'aucune rainure axiale médiane (24) et est déplacée par rapport à une extrémité intérieure (20i) dans la direction axiale du pneumatique de la rainure axiale d'épaulement (20).

10. Pneumatique (1) selon l'une quelconque des revendications 1 à 9, dans lequel
chaque fente d'épaulement (13) a une portion inclinée extérieure (16) prévue à l'extérieur de la portion inclinée intérieure (15) dans la direction axiale du pneumatique, et
la portion inclinée extérieure (16) est inclinée relativement à la portion inclinée intérieure (15).

11. Pneumatique (1) selon l'une quelconque des revendications 1 à 10, dans lequel la pluralité de fentes médianes (11) incluent des premières fentes médianes (11a) et des secondes fentes médianes (11b) ayant une profondeur plus grande que celle des premières fentes médianes (11a), les premières fentes médianes (11a) et les secondes fentes médianes (11b) étant en alternance dans la direction circonférentielle du pneumatique.

12. Pneumatique (1) selon l'une quelconque des revendications 1 à 11, dans lequel une rainure principale médiane (7) s'étendant en zigzag en continu dans la direction circonférentielle du pneumatique est prévue à l'intérieur de la portion en relief médiane (4) dans la direction axiale du pneumatique.
